# EUROPÄISCHE PATENTSCHRIFT

(11) **EP 0 914 595 B1**
(45) Veröffentlichungstag und Bekanntmachung des Hinweises auf die Patenterteilung: **18.09.2002**
(21) Anmeldenummer: 97930346.8
(22) Anmeldetag: 20.06.1997
(51) Int. Cl.: G01G 21/23

(54) **STANDFUSS FÜR EINE MESSZELLE**
SUPPORT BASE FOR A MEASURING CELL
PIED POUR CELLULE DE MESURE

(30) Priorität: 28.06.1996 DE 19625821
(43) Veröffentlichungstag der Anmeldung: 12.05.1999
(73) Patentinhaber: Borngässer, Johannes, 19372 Dütschow (DE)
(72) Erfinder: Borngässer, Johannes, 19372 Dütschow (DE)
(74) Vertreter: Jaap, Reinhard
(86) Internationale Anmeldenummer: DE9701266
(87) Internationale Veröffentlichungsnummer: WO98000688

(56) Entgegenhaltungen:
- EP-A- 0 361 518
- CH-A- 250 939
- DE-U- 9 413 947
- DE-U- 9 419 696
- US-A- 4 483 404

## Beschreibung

Die Erfindung betrifft den Standfuß für eine Meßzelle nach den Merkmalen des Oberbegriffs des Anspruchs 1.

Derartige Standfüße mit den dazugehörigen Meßzellen werden insbesondere bei Waagen, aber auch zur Aufstellung von Maschinen verwendet.

Eine Waage wird beispielsweise als Plattform- oder Behälterwaage ausgeführt und besteht aus einer Wägeplatte mit mindestens drei Standfüßen und eine gleiche Anzahl von auf Druck, Biegung oder Scherung beanspruchter Meßzellen. Jedem Standfuß ist eine Meßzelle zugeordnet.
Die Standfüße mit den Meßzellen sind räumlich voneinander innerhalb der Fläche der Wägeplatte verteilt angeordnet, wobei die Meßzellen sich als Bindeelement zwischen der Wägeplatte und den Standfüßen darstellen. Dazu sind sie einerseits mit ihrem Gehäuse an der Wägeplatte und anderserseits mit ihrem Meßarm am Standfuß befestigt.

Diese Waagen werden in der Regel fabrikmäßig vormontiert und am Aufstellungsort unter Berücksichtigung der örtlichen Bedingungen nachjustiert.

Die Standfüße haben die Aufgabe, die zu messende Last aufzunehmen und die entsprechende Gegenkraft weitestgehend ohne äußere Beeinflussung in die Meßzelle einzuleiten.
Dazu müssen sie eine hohe Kraftaufnahmefähigkeit, Höhenverstellbarkeit und eine große Gelenkfähigkeit besitzen.

Es sind nun eine Reihe von Standfüßen in den unterschiedlichsten Ausführungen bekannt.
So ist aus der EP 319 411 ein Standfuß bekannt, dessen Gelenk aus einem druckbelasteten Lastbolzen mit einem Druckkopf und aus einer geführten Kugel besteht. Sowohl der Druckkopf als auch die Kugel sind spielfrei in einem flexiblen Gummi- oder Plastikkörper eingespannt, wobei sich die Kugel gegen den Boden der Bodenplatte und der Gummi- oder Plastikkörper gegen eine Außenwand der Bodenplatte abstützen.
Mit dieser Gelenkart können nur geringe Kräfte übertragen werden, da zwischen den planen Flächen des Druckkopfes einerseits und der Bodenplatte andererseits und der Kugel jeweils eine Punktberührung stattfindet und die Kugel sich in das Material eindrücken kann. Dieser Nachteil ist auch durch eine außerordentliche Härte des Materials nicht auszugleichen. Eine Vergrößerung des Kugeldurchmessers führt zwar zu einer größeren wirksamen Kontaktfläche, aber gleichzeitig zu einer hochbauende Ausführung des Standfußes und damit der Waage. Auch das ist nachteilig.
Von weiterem Nachteil ist die spielfreie Verbindung des Druckkopfes mit dem Gummi- oder Plastikkörper, weil bei einer Auslenkung des Lastbolzens Verspannungen im Gummi oder in der Plastik auftreten, die sich auf den Meßvorgang auswirken und die Ergebnisse verfälschen.

In der DE 83 03 337.8 U1 ist ein Gelenk beschrieben, das ebenfalls eine Kugel besitzt, die mit einer oberen und einer unteren Druckplatte Kontakt hat. Beide Druckplatten haben kugelseitig eine konkave Druckfläche.
Durch die konkaven Flächenform werden zwar die Kontaktflächen und damit die Tragfähigkeit etwas erhöht, dennoch baut der Standfuß wegen der immer noch sehr großen Kugel relativ groß.

Ein weiterer Nachteil besteht darin, daß bei einem horizontalen Auswandern der Last und damit der Wägeplatte die Kugel abrollt und die Druckplatten wegen der konkaven Flächenform auseinandergedrückt werden. Das führt zu Verspannungen und zu Meßfehlern.

Ein Gelenk mit einem ziehend belasteten Lastbolzen und beidseitiger Lagerung ist aus der DE 92 13 163.8 U1 bekannt.
Die beiden Lager werden jeweils aus einer Kugelscheibe und einer Kugelpfanne gebildet, die mit der Gestaltung und der Dimensionierung ihre Kontaktflächen aufeinander abgestimmt sind.
Auch dieses Gelenk produziert Meßfehler, wenn die einzelnen Kraftübertragungselemente nicht mehr im Lot sind.
Bei seitlicher Belastung der Wägeplatte oder bei einer Schrägstellung der Bodenplatte würden die Kugelscheibe und die Kugelpfanne aneinander gleiten. Zur Gewährleistung dieser für die Beweglichkeit bzw. Auslenkfähigkeit erforderlichen Gleitfähigkeit ist ein entsprechendes Spiel zwischen beiden Bauteilen notwendig. Dieses Spiel verfälscht das Meßergebnis erheblich.
Auch unterliegen diese Bauteilen wegen der Gleitreibung einem höheren Verschleiß.
Weiterhin sind nur geringe Kräfte übertragbar, da die Lastaufnahme am Lastbolzen allein von der beidseitigen Verschraubung getragen wird.

Bekannt ist aus der CH-A-0 250 939 eine Abstell- und Sicherheitsstützeinrichtung für Waagebrücken, bei der die Stützen als Pendelstützen ausgebildet sind. Dabei besitzen die Stützen kugelige Enden und ebene Auflager.

In der DE-U-94 13 947.4 ist weiterhin ein Stützfuß für bodengestützte Wiegezellen beschrieben, der einen Druckblock mit einer ebenen Druckfläche und ein Druckelement mit einer balligen Druckfläche besitzt. Beide Druckelemente sind wiederum in einen federnden Gummikörper eingepreßt.
Weiterhin ist aus der EP-A-0 361 518 eine Plattformwaage bekannt, bei der ein Abstützstempel innerhalb einer Durchgangsbohrung der Kraftmeßzelle und mit einer aufgesetzten Gegenplatte unter Zwischenschaltung eines Ringspaltes angeordnet ist.

Es besteht daher die Aufgabe, einen Standfuß der vorliegenden Gattung zu entwickeln, dessen Gelenk eine große wirksame Kontaktfläche und eine spielfreie Auslenkfähigkeit ohne gleichzeitiger Höhenveränderung besitzt.

Diese Aufgabe wird durch die kennzeichnenden Merkmale des Anspruchs 1 gelöst.
Zweckdienliche Ausgestaltungen der Erfindung ergeben sich aus den Unteransprüchen 2 und 3.

Der Standfuß besteht in der Hauptsache aus einer Bodenplatte 1 und einem druckbelasteten Lastbolzen 2.
Der Lastbolzen 2 besitzt einen, in die Meßzelle einschraubbaren Gewindeschaft 3 und einen, in die Bodenplatte 1 eingesetzten Druckkopf 4.
Der Gewindeschaft 3 ist passend für eine Durchgangs- oder Sacklochbohrung der Meßzelle so bemessen, daß eine für eine ausreichende Höhenverstellung variable Einschraubtiefe möglich ist. Eine Kontermutter 5 sorgt für einen festen und spielfreien Sitz. Für eine Sacklochbohrung wird, wie dargestellt, eine Kontermutter 5 mit möglichst großer Höhe verwendet, um wegen der geringeren Einschraubtiefe den vorhandenen Freiraum zwischen der Bodenplatte 1 und der Meßzelle auszunutzen und um eine zusätzliche Tragfunktion zu übernehmen. Bei Durchgangsbohrungen wird eine Kontermutter 5 mit geringerer Höhe eingesetzt.
Der Druckkopf 4 bildet mit einer Bohrung 6 in der Bodenplatte 1 das tragende Gelenk. Dazu besitzt der Druckkopf 4 stirnseitig eine konvexe bzw. ballige Druckfläche 7 und die Bohrung 6 eine plane Druckfläche 8.

Der Montagezustand von Bodenplatte 1 und dem Lastbolzen 2 wird durch einen Federring 9 in der Art gesichert, daß sich in der Bohrung 6 der Bodenplatte 1 und am Druckkopf 4 jeweils maßlich und räumlich aufeinander abgestimmte Ringnuten 10 und 11 befinden. Zwischen den Ringnuten 10 und 11 liegt der Federring 9.
Zur Gewährleistung einer relativ großen Auslenkfähigkeit des Lastbolzens 2 gegenüber der Bodenplatte 1 sind die Durchmesser des Druckkopfes 4 und der Bohrung 6 mit einem großen Spiel aufeinander abgestimmt. Zum anderen sind die Ringnuten 10 und 11 in besonderer Weise gestaltet. So sind beide Ringnuten 10 und 11 etwa gleich breit ausgelegt, wobei die Nutbreiten den Durchmesser des Federringes 9 um einen bestimmtes Maß übersteigen. Dagegen besitzt die Ringnut 10 der Bohrung 6 eine ebene Grundfläche und die Ringnut 11 des Druckkopfes 4 eine konkav gewölbte Grundfläche. Dabei läuft die konkave Grundfläche der Ringnut 11 beidseitig im Außendurchmesserbereich des Druckkopfes 4 aus, wobei der zur Druckfläche 7 des Druckkopfes 4 gerichtete Auslauf der Ringnut 11 eine gegenüber dem zum Gewindeschaft 3 gerichteten Auslauf geringere Steigung besitzt.

Die Bodenplatte 1 ist mit einer abnehmbaren und flexiblen Kappe 12 versehen. Die Kappe 12 dient dem Schutz und der Rutschfestigkeit der Bodenplatte 1 und der Anpassung an die unterschiedlichsten Bodenverhältnisse und besteht vorzugsweise aus einem gummierten Material. Die Kappe 12 ist gegen andere Kappen mit anderen Qualitäten austauschbar.

Die Montage der Standfüße mit den Meßzellen in die Wägeplatte erfolgt beim Hersteller. Am Aufstellungsort wird die Höhe der einzelnen Standfüße an die örtlichen Gegebenheiten durch eine Veränderung und nachfolgender Konterung der Einschraubtiefe des Gewindeschaftes 1 in die Meßzelle angepaßt.
Durch Unebenheiten im Erdboden kann es bei einem oder bei mehreren Lastfüßen zu einer Auslenkung des Lastbolzens 2 gegenüber der Bodenplatte 1 kommen. Durch ein Abrollen der beiden Druckflächen 7 und 8 wandert die punktförmige Kontaktfläche zwischen den Druckflächen 7 und 8 des Lastbolzens 2 und der Bodenplatte 1 um das Maß der Auslenkung in die Richtung der Auslenkung. So befindet sich die Kontaktfläche immer lotrecht unterhalb der Verbindungsstelle zur Meßzelle. Zu einer vergleichbaren Auslenkung kann es auch bei einem ebenem Untergrund aber bei einer seitliche Belastung der Wägeplatte kommen. Auch diese ungewollte Einwirkung auf den Wägevorgang wird durch das Wandern der Kontaktfläche ohne Beeinflussung des Meßergebnisses kompensiert.

### Aufstellung der Bezugszeichen

- 1: Bodenplatte
- 2: Lastbolzen
- 3: Gewindeschaft
- 4: Druckkopf
- 5: Kontermutter
- 6: Bohrung
- 7: konvexe Druckfläche
- 8: plane Druckfläche
- 9: Federring
- 10: Ringnut
- 11: Ringnut
- 12: Kappe

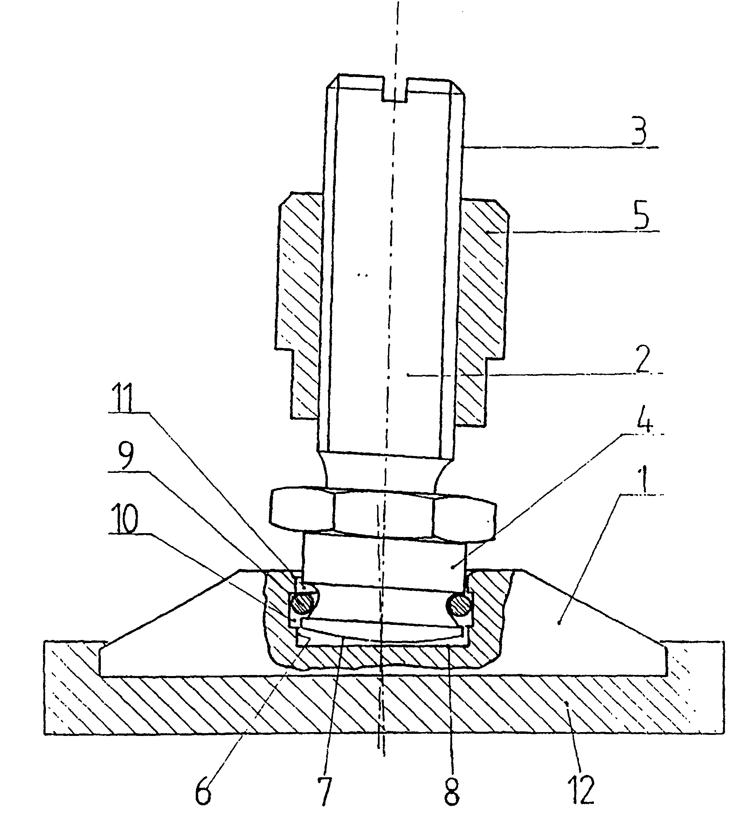

## Patentansprüche

1. Standfuß für eine Meßzelle, bestehend aus einer Bodenplatte (1) mit einer Bohrung (6), die eine ebene Druckfläche (8) besitzt und einem Lastbolzen (2), der einen Druckkopf (4) mit einer konvexen Druckfläche (7) besitzt, wobei der Lastbolzen (2) einen Gewindeschaft (3) zur höhenverstellbaren Verbindung mit der Meßzelle insbesondere einer Waage besitzt und mit der Bodenplatte (1) druckbelastbar und gelenkig verbunden ist,
**dadurch gekennzeichnet, daß** die ebene Druckfläche (8) in die Bodenplatte (1) eingearbeitet ist, der Druckkopf (4) des Lastbolzens (2) mit Spiel in die Bohrung (6) der Bodenplatte (1) eingesetzt ist und die Bodenplatte (1) und der Druckkopf (4) über einen Federring (9) und einer Ringnut (10) in der Bodenplatte (1) und einer Ringnut (11) im Druckkopf (4) verbunden sind.

2. Standfuß nach Anspruch 1,
**dadurch gekennzeichnet, daß** beide Ringnuten (10, 11) gleich breit aber breiter als der Durchmesser des Federringes (9) ausgeführt sind, eine Ringnut (10) eine plane Grundfläche und die andere Ringnut (11) eine konkave Grundfläche besitzt, wobei die konkave Grundfläche im Außendurchmesserbereich der Bohrung (6) oder des Druckkopfes (4) beidseitig ausläuft und der zur Druckfläche (7) des Druckkopfes (4) gerichtete Auslauf eine geringere Steigung besitzt als der zum Gewindeschaft (3) gerichtete Auslauf.

3. Standfuß nach Anspruch 2,
**dadurch gekennzeichnet, daß** die den Durchmesser des Federringes (9) übersteigende Breite der Ringnuten (10, 11) der Ballungshöhe der wirksamen Kontaktfläche der Druckfläche (7) entspricht.

## Claims

1. Standing foot for a measuring cell, the said foot comprising a base plate (1) with a bore (6) which possesses a flat pressure face (8), and a load bolt (2) which possesses a pressure head (4) with a convex pressure face (7), the said load bolt (2) possessing a threaded shaft (3) for vertically adjustable connection to the measuring cell, particularly of a weighing machine, and being connected to the base plate (1) in a pressure-loadable and articulated manner,
**characterised in that** the flat pressure face (8) is machined into the base plate (1), the pressure head (4) of the load bolt (2) is inserted with clearance in the bore (6) in the base plate (1), and the said base plate (1) and the pressure head (4) are connected via a spring ring (9) and an annular groove (10) in the base plate (1) and an annular groove (11) in the pressure head (4).

2. Standing foot according to claim 1,
**characterised in that** the two annular grooves (10, 11) are designed so as to be of equal breadth but broader than the diameter of the spring ring (9), and one annular groove (10) possesses a planar basal face and the other annular groove (11) possesses a concave basal face, the said concave basal face running out in the outer-diameter region of the bore (6) or of the pressure head (4) on either side, and the run-out which is directed towards the pressure face (7) of the pressure head (4) possessing a smaller gradient than the run-out which is directed towards the threaded shaft (3).

3. Standing foot according to claim 2,
**characterised in that** the breadth of the annular grooves (10, 11) which exceeds the diameter of the spring ring (9) corresponds to the height of agglomeration of the effective contact area of the pressure face (7).

## Revendications

1. Pied pour une cellule de mesure, composé d'une plaque d'appui au sol (1) munie d'un perçage (6). et possédant une surface d'appui plane (8), et d'un goujon de charge (2) muni d'une tête de poussée (4) avec une surface d'appui (7) convexe, le goujon de charge (2) ayant une tige filetée (3) pour être relié de manière réglable en hauteur à la cellule de mesure, notamment à une balance, et de manière articulée et de façon à transmettre une poussée à la plaque de sol (1),
**caractérisé en ce que**
la surface d'appui plane (8) est usinée dans la plaque de sol (1), cette surface recevant la tête de poussée (4) du goujon de charge (2) avec du jeu dans le perçage (6) de la plaque de sol (1), et cette plaque (1) et la tête de poussée (4) sont reliées par un anneau élastique (9) dans une rainure annulaire (10) de la plaque de sol (1) et dans une rainure annulaire (11) de la tête de poussée (4).

2. Pied selon la revendication 1,
**caractérisé en ce que**
les deux rainures annulaires (10, 11) sont de même largeur et cette largeur est supérieure au diamètre de l'anneau élastique (9), une rainure annulaire (10) ayant une surface de base plane et l'autre rainure annulaire (11) une surface de base concave,
cette surface de base concave se terminant des deux côtés au niveau de la zone du diamètre extérieur du perçage (6) ou de la tête de poussée (4), la sortie dirigée vers la surface de pression (7) de la tête de poussée (4) ayant une pente inférieure à la sortie tournée vers la tige filetée.

3. Pied selon la revendication 2,
**caractérisé en ce que**
la largeur des rainures annulaires (10, 11) qui dépasse le diamètre de l'anneau élastique (9) correspond à la hauteur bombée de la surface de contact efficace de la surface de pression (7).
